# FASCICULE DE BREVET EUROPEEN

(11) **EP 4 544 244 B1**
(45) Date de publication et mention de la délivrance du brevet: **08.04.2026**
(21) Numéro de dépôt: 23734286.0
(22) Date de dépôt: 23.06.2023
(51) Int. Cl.: F24T 10/10

(54) **ARCHITECTURE DE FORAGE MÉNAGÉE DANS UN SOUS-SOL POUR UNE INSTALLATION GÉOTHERMIQUE, INSTALLATION ET PROCÉDÉ ASSOCIÉ**
IN EINEM UNTERGRUND FÜR EINE GEOTHERMALE ANLAGE AUSGEBILDETES BOHRLAYOUT, ANLAGE UND ZUGEHÖRIGES VERFAHREN
DRILLING LAYOUT FORMED IN A SUBSOIL FOR A GEOTHERMAL INSTALLATION, INSTALLATION AND ASSOCIATED METHOD

(30) Priorité: 24.06.2022 FR 2206306
(43) Date de publication de la demande: 30.04.2025
(73) Titulaire: Dynasteer, 58201 Cosne-Cours-sur-Loire Cedex (FR)
(72) Inventeur: MILLET, François, Guy, Jacques, René, 92160 ANTONY (FR); BENOIT, Albert Louis, 45600 SAINT-PERE-SUR-LOIRE (FR)
(74) Mandataire: Lavoix
(86) Numéro de dépôt international: PCT/EP2023/067149
(87) Numéro de publication internationale: WO 2023/247768

(56) Documents cités:
- WO-A1-2022/029699
- CN-A- 103 362 442
- CN-A- 109 505 580
- CN-A- 113 279 728
- DE-C2- 4 229 185
- US-A- 3 878 884
- US-A1- 2016 245 550
- US-A1- 2018 274 524
- US-A1- 2022 034 258

## Description

La présente invention concerne une architecture de forage selon le préambule de la revendication 1.

Une telle architecture est destinée à être utilisée notamment en tant qu'échangeur thermique en boucle fermée au sein d'une installation géothermique non-intrusive.

Une telle architecture ne nécessite pas de disposer d'un site souterrain produisant un fluide géothermique chaud, provenant par exemple d'un aquifère. Elle présente l'avantage de pouvoir être installée dans des sites variés et ne repose que sur le gradient thermique et non sur l'extraction d'un fluide du sous-sol.

Une telle architecture est configurée pour la circulation d'un fluide caloporteur dans une boucle définie à travers l'un du puits incliné ou du puits vertical, puis à travers des drains forés en profondeur dans le sol, et enfin en retour dans l'autre d'un du puits incliné ou du puits vertical. Lors de sa circulation, notamment dans les drains, le fluide caloporteur emmagasine de l'énergie thermique du sous-sol provenant principalement de la radioactivité de la croute terrestre. Le fluide caloporteur réchauffé ramené à la surface alimente une installation de récupération pour la distribution d'énergie thermique, et/ou la conversion d'énergie thermique récupérée notamment en énergie électrique. Le fluide caloporteur peut également transmettre de l'énergie thermique au sous-sol afin de se refroidir.

On connait de WO 2020/197511, une architecture du type précité comprenant plusieurs drains avec un puits incliné et un puits vertical. Les drains sont convergents en un point unique (appelés diviseur ou collecteur tels que décrits dans EP 3 762663) et permettent de limiter le nombre de trous à forer, d'équilibrer les pertes de charge dans les drains, tout en ayant une grande surface d'échange thermique souterraine. Dans leur zone non convergente, les drains sont répartis avec un certain espacement spatial entre chaque drain pour maximiser l'échange de chaleur par chaque drain en s'assurant qu'ils ne se gênent pas les uns les autres.

Toutefois une telle architecture ne donne pas entière satisfaction. La réalisation d'un forage selon les angles et dispositions précitées est difficile et très coûteuse. Par exemple, les raccordements entre le puits incliné et les drains nécessitent de réaliser des coudes qui risquent de détériorer, voire de rendre inopérant les outils de forage. La présence d'un point de convergence unique entre les drains et le puits vertical nécessite d'obtenir une précision de forage très grande, qui peut conduire à ralentir le forage, et/ou à éliminer des drains non convergents.

Un but de l'invention est donc d'obtenir une architecture de forage propre à permettre un échange thermique performant entre un fluide caloporteur et le sous-sol dans laquelle elle est ménagée, qui offre néanmoins des trajectoires de forage simplifiées et économiques à réaliser comme à maintenir.

A cet effet l'invention a pour objet une architecture de forage selon la revendication 1.

L'architecture de forage selon l'invention peut comporter l'une ou plusieurs des caractéristiques des revendications 1 à 9 ou la caractéristique suivante, prises isolément ou suivant toute combinaison techniquement possible :
- l'angle formé par l'axe local du tronçon droit vertical du puits latéral orienté vers le bas et par l'axe local du tronçon latéral incliné orienté vers le bas, pris au niveau de l'intersection entre ces deux axes est un angle aigu, le puits latéral étant concave.

L'invention a également pour objet une installation géothermique selon la revendication 10.

L'invention a également pour objet un procédé de fabrication d'une architecture de forage dans un sous-sol selon la revendication 11.

Le procédé de forage selon l'invention peut comporter l'une ou plusieurs des caractéristiques des revendications 12 ou 13 ou la caractéristique suivante, prises isolément ou suivant toute combinaison techniquement possible :
- l'outil de forage (communément appelé « garniture de forage ») comporte une mèche de forage, un train de tiges rotatif et un système orientable rotatif entre la mèche de forage et le train de tiges propre à modifier l'orientation angulaire de la mèche de forage par rapport au train de tiges.

L'invention sera mieux comprise à la lecture de la description qui va suivre, donnée uniquement à titre d'exemple et faite en se référant aux dessins annexés sur lesquels :
- la Figure 1 est une vue schématique en coupe suivant un plan vertical médian d'une installation géothermique de forage munie d'une unité d'échange thermique
- la Figure 2 est une vue schématique en coupe suivant un plan vertical médian illustrant un procédé de forage de l'unité d'échange thermique de la figure 1 ;
- la Figure 3 est une vue schématique en coupe suivant un plan vertical médian d'une variante d'installation géothermique de forage munie de deux unités d'échange thermique coplanaires ;
- la Figure 4 est une vue schématique en coupe suivant un plan vertical médian d'une autre installation géothermique de forage munie de deux unités d'échange thermique disposées à 180° et partageant un puits ; et
- la Figure 5 est une vue schématique en coupe suivant un plan vertical médian d'une architecture de forage réalisée initialement pour l'exploitation d'un aquifère et propre à être transformée en une architecture de forage selon l'invention si l'aquifère n'est pas exploitable voire inexistant.

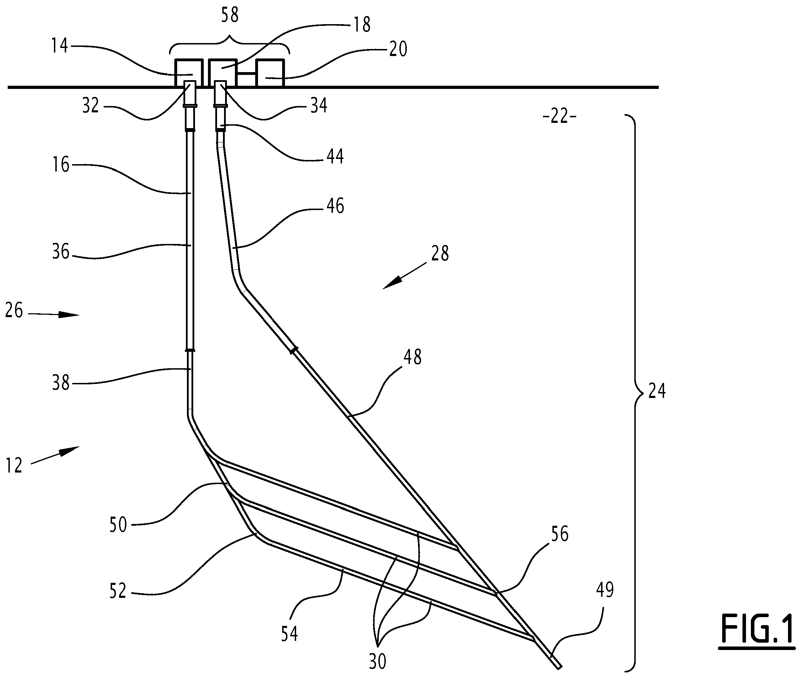

Une première installation géothermique 10 pour la production de chaleur selon l'invention est représentée schématiquement sur la figure 1.

L'installation 10 comporte une architecture de forage 12 selon l'invention, un système de pompage 14 de fluide caloporteur 16 dans l'architecture de forage 12, un système de récupération 18 du fluide caloporteur 16 réchauffé à partir de l'architecture de forage 12 et un dispositif de distribution ou/et de conversion d'énergie 20 à partir du fluide caloporteur 16 réchauffé.

L'architecture de forage 12 est ménagée dans un sous-sol 22 à travers des formations du sous-sol 22. Elle comporte au moins une unité d'échange thermique 24 située dans un plan. L'unité d'échange thermique 24 comporte au moins un puits central 26, au moins un puits latéral 28 et au moins deux drains 30 raccordant le puits central 26 au puits latéral 28, les puits 26, 28 et les drains 30 étant coplanaires.

L'unité d'échange thermique 24 est un ensemble de conduits souterrains traversés par le même fluide caloporteur 16, apporté par le système de pompage 14 et récupéré par le système de récupération 18. La chaleur du fluide caloporteur 16 récupérée par le système de récupération 18 est exploitée par le dispositif de distribution ou/et de conversion d'énergie 20, par exemple pour générer de la vapeur entrainant une turbine.

Le puits central 26 et le puits latéral 28 débouchent en surface. Ces puits 26, 28 sont contrôlés au niveau de la surface du sous-sol par des têtes de puits 32, 34.

Le puits central 26 comporte un tronçon vertical supérieur 36 partant de la surface et pénétrant verticalement dans le sous-sol 22, et un tronçon vertical ou incliné inférieur 38 situé dans le prolongement inférieur du tronçon vertical supérieur 36.

Le tronçon vertical supérieur 36 possède un diamètre intérieur supérieur au diamètre intérieur du tronçon inférieur 38. Il présente avantageusement un cuvelage cimenté à la formation, (notamment un cuvelage isolant thermiquement dans le cas où le fluide caloporteur chaud est remonté par ce puits).

La profondeur du puits central 26 est avantageusement comprise entre 200 mètres et 5000 mètres afin d'atteindre une roche métamorphique ou plutonique apte à supporter l'érosion du fluide caloporteur en continu durant au moins 50 ans.

Le puits latéral 28 comporte dans cet exemple un tronçon droit vertical 44, débouchant au niveau de la surface du sous-sol 22, un tronçon de faible inclinaison 46 (pour éviter tout risque d'interférence avec le tronçon vertical supérieur 36 du puits central 26), relié au tronçon droit vertical 44 par une courbe et un tronçon latéral incliné 48 qui prolonge vers le bas le tronçon de faible inclinaison 46. Le puits latéral 28 définit aussi une jambe de sédimentation 49 qui termine vers le bas le tronçon latéral incliné 48.

L'angle défini par l'axe local du tronçon droit vertical 44 orienté vers le bas et l'axe local du tronçon de faible inclinaison 46 également orienté vers le bas est avantageusement compris entre 2 et 10°.

L'angle défini par l'axe local du tronçon droit vertical 44 orienté vers le bas, et par l'axe local du tronçon latéral incliné 48 également orienté vers le bas est avantageusement compris entre 30° et 50°. Ceci fournit une unité d'échange thermique ayant une surface d'échange importante tout en limitant l'inclinaison des tronçons et l'étendue latérale de l'architecture de forage 12, pour en faciliter la réalisation comme la maintenance.

Les drains 30 sont forés à partir du puits central 26 et relient ce dernier au puits latéral 28. Chaque drain 30 comporte une intersection centrale 50 avec le tronçon inférieur 38 du puits central 26, un tronçon coudé 52, un tronçon linéaire 54 et une intersection latérale 56 avec le tronçon latéral incliné 48 du puits latéral 28.

L'intersection centrale 50 avec le tronçon inférieur 38 du puits central 26 est positionnée dans le plan vertical de l'unité d'échange thermique 24 et relie le tronçon inférieur 38 du puits central 26 au tronçon coudé 52.

Le tronçon coudé 52 est prolongé par le tronçon linéaire 54. Le tronçon linéaire définit la localisation préférentielle pour l'échange thermique entre le fluide caloporteur 16 et la formation. Le tronçon linéaire 54 débouche dans le puits latéral 28 au niveau de l'intersection latérale 56.

Les tronçons coudés 52 des drains 30 possèdent un rayon de courbure tel que l'angle formé par l'axe local du puits central 26 orienté vers le bas au niveau de l'intersection centrale 50 et l'axe local du drain 30, pris au niveau de l'intersection latérale 56, orienté à l'écart du puits central 26, est strictement inférieur à 90° et est notamment compris entre 45° et 70°.

Le tronçon linéaire 54 est délimité extérieurement par une roche non adiabatique laissant passer un flux de chaleur entre le sous-sol 22 et le fluide caloporteur 16 présent dans le tronçon linéaire 54 du drain 30. La formation traversée par ce dernier est par exemple une roche métamorphique, notamment du gneiss, ou une roche plutonique, notamment du granite. Le tronçon linéaire 54 est ici dépourvu de cuvelage pour maximiser l'échange thermique entre la formation et le fluide caloporteur 16 et réduire la durée, le cout et les risques liés à la réalisation de l'unité d'échange thermique 24.

Les tronçons linéaires 54 des drains 30 sont forés parallèlement les uns au-dessus des autres dans le plan vertical de l'unité d'échange thermique.

La distance séparant les tronçons linéaires 54 selon une direction orthogonale aux tronçons linéaires 54 est par exemple comprise entre 50 m et 500 m, notamment entre 80 m et 200 m.

Le tronçon linéaire 54 se termine par l'intersection latérale 56 avec le tronçon latéral incliné 48 située au-dessus de la jambe de sédimentation 49.

Les intersections des drains 30 avec le puits central 26 et avec le tronçon latéral incliné 48 sont séparées les unes des autres. Les drains 30 débouchant dans le puits latéral 28, sont inclinés d'un angle inférieur à 45° par rapport au tronçon latéral incliné 48, au niveau de l'intersection latérale 56, par exemple d'un angle compris entre 15° et 35°.

La jambe de sédimentation 49 est destinée à recevoir les éventuels débris de forage ou d'outils introduits dans le puits latéral 28 ou dans les drains 30 en évitant d'obstruer les tronçons 30, 36, 38, 44, 46, 48, 50, 52, 54 et 56.

L'ensemble de surface 58 de l'installation 10 reçoit le système de pompage 14, le système de récupération 18 et le dispositif de distribution ou/et de conversion d'énergie 20. L'ensemble de surface 58 est positionné à la surface du sous-sol 22 et accueille les têtes des puits 32 et 34.

La distance en surface entre la tête 32 du puits central 26 et la tête 34 du puits latéral 28, au sein d'une même unité d'échange thermique est avantageusement comprise entre 20 m et 100 m.

Le système de pompage 14 du fluide caloporteur 16 est relié à la tête de puits 32 du puits injecteur, qui est l'un du puits central 26 ou du puits latéral 28 en fonction du sens d'écoulement désiré dans l'architecture de forage 12. Le système de pompage 14 pompe un fluide caloporteur 16 dans le puits injecteur à une pression adaptée au bon écoulement du fluide au sein de l'architecture de forage 12.

Le fluide caloporteur 16 est par exemple à base d'eau ou d'un autre liquide comme un alcool, une huile ou d'un réfrigérant, ou encore du CO₂. Le fluide ou gaz caloporteur circule alors en boucle fermée éventuellement pressurisée.

Le système de récupération 18 du fluide caloporteur 16 est relié à la tête du puits producteur formé par l'autre du puits central 26 ou du puits latéral 28. Le système de récupération 18 assure la récupération du fluide caloporteur 16 réchauffé et le renvoi vers le dispositif de distribution ou/et de conversion d'énergie 20. Dans le cas de la conversion en électricité, le dispositif de conversion d'énergie 20 comporte par exemple une turbine pour la détente de vapeur produite à partir du fluide caloporteur 16 réchauffé, un générateur d'électricité et un condenseur pour le refroidissement du fluide caloporteur 16.

Dans le cas d'une distribution d'énergie, le fluide caloporteur sert directement ou échange thermiquement avec un fluide pour réaliser un chauffage par exemple de logements, d'usines, de processus industriel, de serres, d'hôtels, de piscine, de centre de loisir, etc.

Dans un autre mode de réalisation, le fluide caloporteur peut également servir à refroidir ces derniers ainsi que l'eau des centrales thermiques (charbon, fuel, gaz et nucléaire) pour en réduire la consommation en remplaçant les tours de refroidissement.

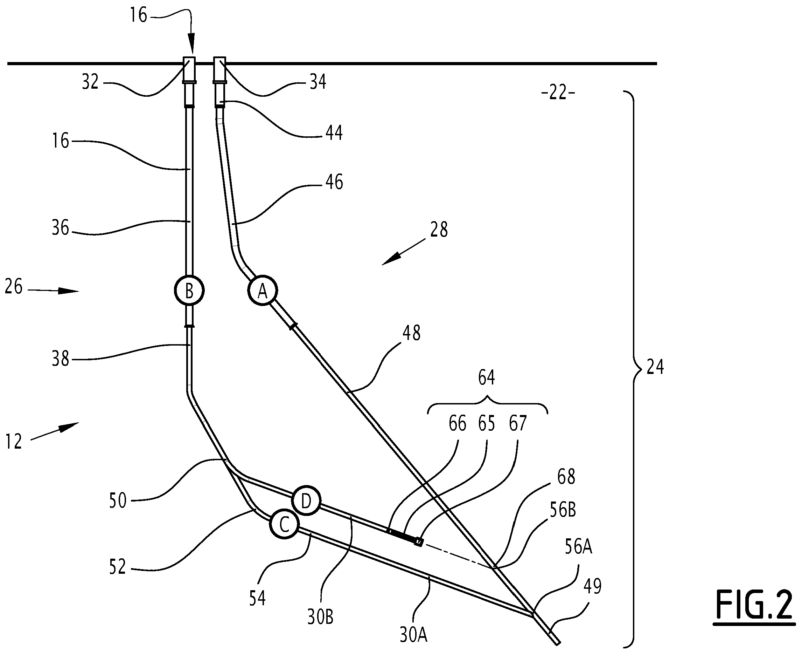

Un procédé de construction de l'architecture de forage 12 va maintenant être décrit, en référence notamment à la figure 2. Ce procédé est mis en œuvre avec une installation de surface comportant un outil de forage dirigé 64 muni d'un système orientable 65, des moyens d'entraînement en rotation de l'outil de forage dirigé 64 avantageusement en fond comme en surface et des moyens d'injection d'un fluide de forage dans l'outil de forage 64 (non représentés).

L'outil de forage 64 (ou « garniture de forage) comprend un train de tiges 66 creux placé dans le puits à forer, une mèche de forage 67, et un système orientable 65 supportant la mèche de forage 67.

Le système orientable 65 est apte à mesurer en continu l'inclinaison, l'azimut et la pression de boue autour de l'outil de forage 64. Il est également apte à communiquer avec les équipements de surface et à détecter et être guidé par une balise active 68 placée dans le tronçon latéral incliné 48 du puits latéral 28.

La mèche de forage 67 comprend des outils de destruction de roche et est avantageusement entraînée en rotation par rapport au train de tiges 66 autour de l'axe du train de tiges 66 par l'intermédiaire d'un moteur de fond.

Les outils de destruction de roche utilisent par exemple un outil de diamant polycristallin compact (PDC) ou tricône, un système de percussion et/ou des hautes pressions pulsées (HPP), du plasma ou un forage à ondes électromagnétiques millimétriques pour forer les roches métamorphiques et plutoniques.

Le train de tiges 66 est vissé de manière démontable au-dessus du système orientable rotatif 65. Il est formé d'une pluralité de tiges creuses vissées verticalement les unes avec les autres au fur et à mesure de la progression du forage du puits. Le train de tiges 66 définit un conduit intérieur de circulation du fluide de forage.

Le système orientable rotatif 65 définit une articulation pilotée entre un corps principal et un boîtier orientable pour assurer le contrôle de la direction de forage en temps réel. Un exemple de système orientable rotatif 65 est décrit dans WO2007/110502A1.

Le fluide de forage est avantageusement à base d'eau et de bentonites additivées si besoin pour réduire l'investissement et les risques de pollution.

Dans une première phase marquée A sur la figure 2, le forage de l'architecture 12 commence par exemple par la réalisation du puits latéral 28 à partir de la surface.

Le tronçon droit vertical 44, le tronçon légèrement incliné 46 et le tronçon latéral incliné 48 sont forés successivement, l'outil de forage 64 s'inclinant progressivement grâce au système orientable rotatif 65.

Un fluide de forage est introduit en surface et circule dans le conduit intérieur de circulation du train de tiges 66 jusqu'à la mèche de forage 67. En sortant au niveau de la mèche de forage 67, il assure une lubrification et un refroidissement de cette dernière.

Le fluide de forage remonte ensuite par l'espace annulaire défini entre l'outil de forage 64 ou le train de tiges 66 et la formation définie par la paroi du puits latéral 28 assurant le nettoyage du puits et le maintien de ses parois.

Le forage du puits latéral 28 se termine par la réalisation de la jambe de sédimentation 49 au fond du puits latéral 28 pour pouvoir gérer les déchets potentiels créés durant les opérations ultérieures. L'outil de forage 64 est ressorti du puits latéral 28 par sa tête de puits 34.

Puis, dans une deuxième phase représentée par la lettre B sur la figure 2, le puits central 26 est foré en débutant par le tronçon vertical supérieur 36 avec un retour du fluide de forage dans l'espace annulaire défini entre l'outil de forage 64 et la formation définie par la paroi du puits central 26.

Préalablement à une troisième phase C de forage, une balise active 68 est placée dans le puits 28 au point d'intersection latéral 56A pour guider l'outil 65 au dit point 56A avec l'aide éventuelle d'un guidage logiciel en surface. Une sonde de pression est associée à la balise active 68 pour mesurer en continue la pression au point d'intersection latéral 56A. La balise active 68 et la sonde sont descendues au câble électrique ou avantageusement avec un tube en spirale (« coiled tubing » en anglais) équipé d'un câble électrique assurant l'alimentation électrique de la balise active 68 et de la sonde ainsi que la communication en temps réel avec la surface.

Dans la troisième phase représentée par la lettre C sur la figure 2, le tronçon inférieur 38, l'intersection centrale 50, le tronçon coudé 52 et le drain le plus en profondeur 30A sont ensuite forés jusqu'à l'intersection latérale 56A avec le puits latéral 28 en diminuant le diamètre de forage suite à la pose du cuvelage de production dans le tronçon vertical supérieur 36 du puits central 26. Le retour du fluide de forage, chargé en débris de forage, est également effectué par l'espace annulaire autour de l'outil de forage 64 ou le train de tiges 66.

Durant toute la phase C de forage du drain 30A, du fluide de forage est injecté avantageusement avec un tube en spirale dans le puits latéral 28 pour le maintenir à une pression au moins égale à celle du fluide de forage du drain 30A. Lorsque l'intersection latérale 56A entre le puits latéral 28 et le drain 30A est ménagée, une surpression est maintenue par rapport au drain 30A venant d'être foré.

Dans une quatrième phase représentée par la lettre D sur la figure 2, le drain 30B est foré. L'intersection centrale 50 entre le tronçon inférieur 38 et le premier drain 30A est déjà créée et l'outil de forage 64 bifurque à l'aide du système orientable rotatif 65 pour forer le drain 30B.

Simultanément, la balise active 68 et la sonde de pression sont remontées au point d'intersection suivant 56B.

Le retour de fluide de forage se fait ainsi par l'espace annulaire autour de l'outil de forage 64 dans les tronçons 52, 54 du drain 30B puis dans le puits central 26 jusqu'à la surface, même quand l'intersection latérale 56B est ménagée.

La surpression maintenue à l'intersection latérale 56B lors de son forage assure le retour du fluide de forage dans l'annulaire autour de l'outil de forage 64 et évite que des débris de forage se déversent dans le puits latéral 28 ou/et le drain 30A et les bouchent.

La pression du fluide de forage dans le puits latéral 28 est maintenue en injectant du fluide de forage dans le puits latéral 28 et en la laissant circuler par le ou les drains 30A précédemment forés et remonter par le puits vertical 26.

Le retour de fluide de forage dans l'espace annulaire de l'outil de forage 64 ou le train de tiges 66 dans le puits central 26 est la somme du débit de fluide de forage provenant du puits latéral et du débit de fluide de forage provenant du forage du nouveau drain 30B. Le diamètre du tronçon vertical supérieur 36 étant supérieur au diamètre du tronçon vertical inférieur 38 et en particulier au diamètre de chaque drain, le débit cumulé de fluides de forage provenant de différents drains 30A, 30B est ainsi rendu possible.

Chaque drain 30 suivant est alors foré de la même manière, identique à la phase représentée par la lettre D sur la figure 2. A cet effet, l'outil de forage 64 recule dans le tronçon inférieur 38 du puits central 26 et commence à forer au-dessus de l'intersection centrale 50 entre le drain précédent 30 et le puits central 26. Les drains sont ainsi forés successivement en commençant par le plus en profondeur et en allant vers le haut.

Simultanément, la balise active 68 et la sonde de pression sont remontées au point d'intersection 56 suivant.

Une fois tous les drains 30A, 30B forés et l'outil de forage 64 sorti de l'architecture de forage 12, l'architecture de forage 12 est nettoyée en injectant un fluide par une des têtes de puits 32, 34 pour s'assurer qu'il ne subsiste pas de résidus bloquant un des puits 26, 28 ou un des drains 30.

Le fluide de nettoyage sera avantageusement le fluide de forage filtré progressivement en surface ; de sorte que l'impact environnemental soit minimum.

L'utilisation de l'installation géothermique 10 pour la production de chaleur va maintenant être brièvement décrite.

Le fluide caloporteur 16 est injecté par le système de pompage 14 dans l'architecture de forage 12 par une des têtes de puits 32, 34. Le fluide caloporteur 16 circule alors dans l'un du puits central 26 ou du puits latéral 28.

Le fluide caloporteur 16 est ensuite réparti dans les drains 30 où grâce aux parois non adiabatiques des tronçons linéaires 54 des drains 30, le fluide 16 reçoit un flux thermique des roches chaudes présentes dans le sous-sol 22.

Des duses ou des pertes de charge sont avantageusement installées dans les drains 30 pour ajuster la répartition des débits dans lesdits drains.

Le fluide caloporteur 16 est alors réacheminé dans le système de récupération 18 via l'autre du puits central 26 ou du puits latéral 28 et ressort par sa tête de puits 32 ou 34. Il passe alors avantageusement après filtrage dans le dispositif de distribution ou/et de conversion d'énergie 20 où il transmet son énergie thermique pour qu'elle puisse être distribuée dans un système de chauffage (logements, usine, processus industriel, serres, hôtel, piscine, centre de loisir ...) et/ou convertie en énergie mécanique et éventuellement en énergie électrique par un générateur.

Le fluide caloporteur 16 est alors réacheminé si besoin dans un condenseur pour le régénérer ou le refroidir. Il est ensuite réinjecté dans l'architecture de forage 12 par le système de pompage 14 et le cycle recommence.

L'architecture de forage 12 selon l'invention est simple à forer grâce à des trajectoires simplifiées, tout en permettant un échange thermique performant entre le fluide caloporteur 16 et le sous-sol 22. Le forage dans un même plan vertical limite les déviations angulaires, sources de risque et de coût. De plus le forage d'une telle architecture 12 est facilité par un outil de forage 64 possédant un système orientable rotatif 65, telle que celle illustrée dans WO 2007/110502.

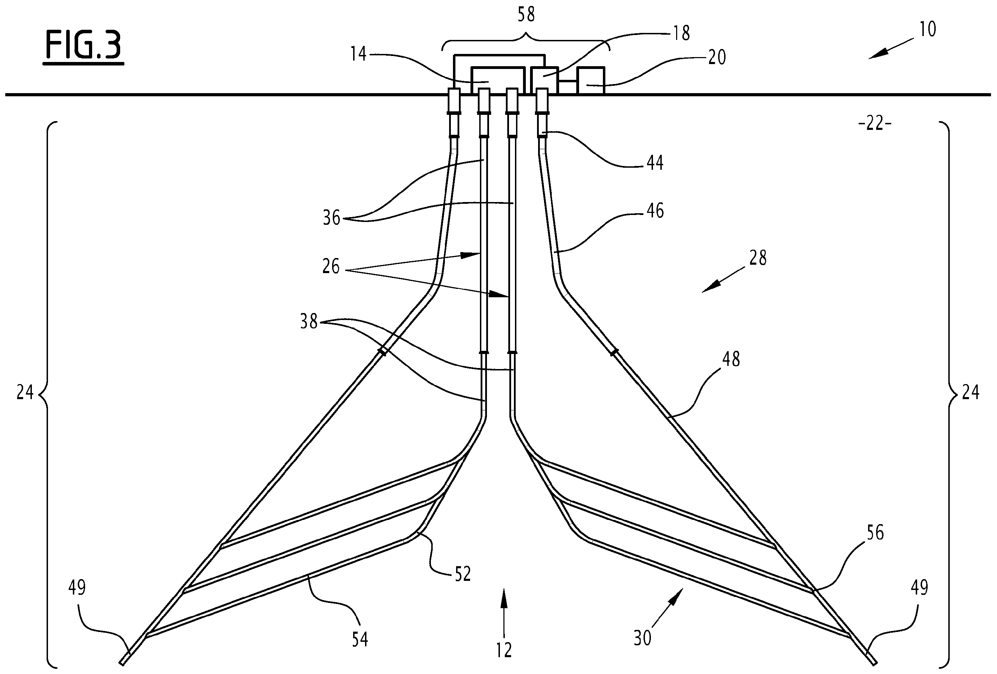

Dans un autre mode de réalisation, plusieurs unités d'échange thermique 24 sont forées côte à côte. Comme représenté sur la figure 3, deux unités d'échange thermique 24 sont représentées dans le même plan et partagent le même ensemble de surface 58. En variante les « N » unités d'échange thermique 24 chacune située dans un plan ne sont pas coplanaires les unes avec les autres. Elles sont alors reparties soit linéairement dans des plans d'échangeurs parallèles ; soit autour d'un axe vertical tous les 360/N°.

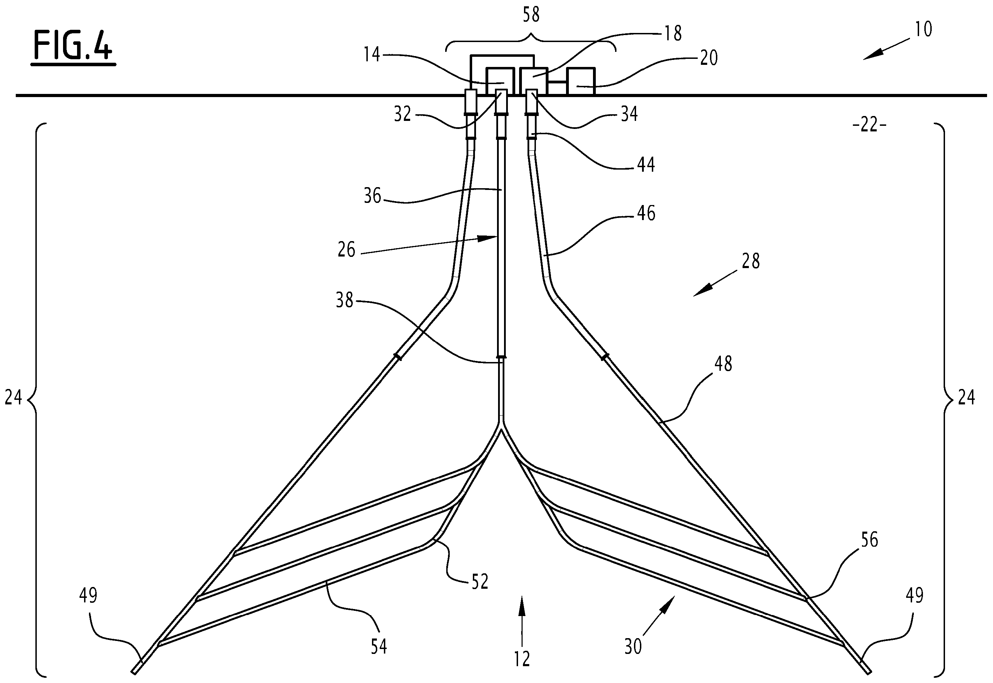

Ces deux unités d'échange thermique 24 sont aussi représentées dans une autre configuration avec un puits central 26 commun aux deux unités 24 comme illustré par la figure 4. En variante, « N » unités d'échange thermique 24 sont réparties uniformément autour de l'axe du puits central 26 commun aux « N » unités 24.

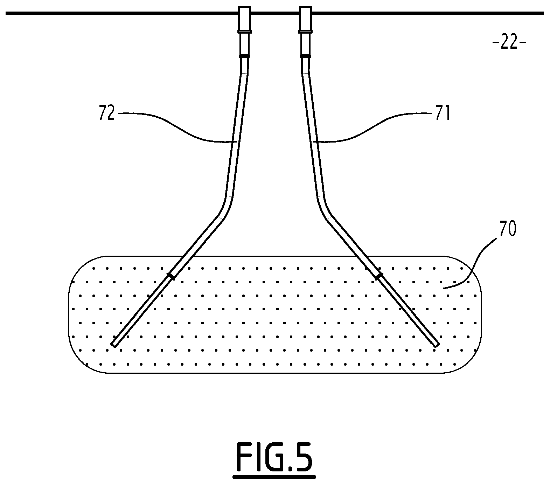

Une variante de procédé de forage est illustrée sur la figure 5. Dans un tel procédé une architecture de forage destinée à l'exploitation de fluide géothermique contenu dans un aquifère 70 est initialement forée. Cette architecture comporte plusieurs puits latéraux forés 71, 72 destinés normalement à récupérer et/ou exploiter le fluide géothermique.

Dans le cas où la production de fluide géothermique n'est pas possible ou n'est pas suffisante pour que l'exploitation de l'aquifère 70 soit rentable, au moins un puits central 26 est foré dans le plan de chaque puits latéral 71, 72, puis des drains 30 sont forés à travers l'aquifère 70. Le fluide géothermique exploité est alors remplacé par un fluide caloporteur 16 après avoir mis en place un ensemble de surface 58 adapté.

Ce procédé de forage permet d'amortir les coûts de forage de puits latéraux 71, 72, alors que l'exploitation de l'aquifère 70 n'est plus souhaitée ou réalisable.

Dans la présente demande, on entend par « géothermie » l'ensemble des techniques qui visent à exploiter les phénomènes thermiques internes du globe terrestre par échange thermique avec le sous-sol. L'installation géothermique 10 peut donc être utilisée comme décrit précédemment pour réchauffer le fluide caloporteur 16 par transfert spontané d'énergie thermique depuis le sous-sol 22 chaud vers le fluide caloporteur 16 plus froid que le sous-sol. En variante, l'installation géothermique 10 peut être utilisée pour refroidir un fluide caloporteur 16 plus chaud que le sous-sol 22 par transfert thermique spontané d'un fluide caloporteur 16 vers le sous-sol 22 plus froid. Ceci ne nécessite en général aucune modification de l'architecture de forage 12, mais juste une adaptation du dispositif de distribution ou/et de conversion d'énergie 20 en surface.

Dans un mode de réalisation de l'installation géothermique 10, comme il est indiqué plus haut, la distance en surface entre le puits central 26 et le puits latéral 28 au sein d'une même unité d'échange thermique est comprise entre 20 m et 100 m. Les puits central et latéral sont alors proches. En conséquence, un seul site de forage est requis pour la réalisation de l'ensemble de l'installation géothermique 10.

Dans les exemples représentés sur les figures, le puits central 26 d'une part, et le ou chaque puits latéral 28 sont asymétriques, c'est-à-dire qu'aucun plan de symétrie vertical n'existe entre le puits central 26 et le ou chaque puits latéral autre que celui dans lequel sont disposés le puits central 26, le puits latéral 28 et les drains 30

Le forage du tronçon latéral incliné 48 du puits latéral 28 et les tronçons linéaires 54 des drains 30 (désigné par le terme anglais «slants») de l'architecture de forage 12 peuvent être réalisés au moyen d'un dispositif de forage comprenant un ensemble de forage rotatif (désigné par le terme anglais « rotary Bottom Hole Assembly » ou par l'acronyme « rotary BHA »). Ceci limite les coûts du forage.

## Revendications

1. Architecture de forage (12) ménagée dans un sous-sol (22) pour une installation géothermique (10), comportant au moins une unité d'échange thermique (24) comprenant :
- au moins un puits foré central (26) s'étendant depuis la surface du sous-sol (22) ;
- au moins un puits foré latéral (28) s'étendant depuis la surface du sous-sol (22) et présentant un tronçon latéral incliné (48) ;
- au moins deux drains (30A, 30B) forés disjoints raccordant le puits central (26) et le tronçon latéral incliné (48) du puits latéral (28) ;
**caractérisée en ce que** pour la ou chaque unité d'échange thermique (24), le puits central (26), le puits latéral (28) et chaque drain (30) sont disposés dans un même plan vertical, les intersections des drains (30) avec le puits central (26) et avec le tronçon latéral incliné (48) étant séparées les unes des autres et les drains (30) débouchant inclinés d'un angle inférieur à 45° par rapport au tronçon latéral incliné (48).

2. Architecture de forage (12) selon la revendication 1, dans laquelle le puits central (26) est vertical.

3. Architecture de forage (12) selon l'une quelconque des revendications précédentes, dans laquelle le puits central (26) présente au moins un tronçon vertical supérieur (36) situé au-dessus des drains (30), le tronçon vertical supérieur (36) présentant un diamètre supérieur au diamètre de chaque drain (30).

4. Architecture de forage (12) selon l'une quelconque des revendications précédentes, dans laquelle les drains (30) sont forés dans une roche plutonique, notamment dans du granite ou dans une roche métamorphique, notamment dans du gneiss.

5. Architecture de forage (12) selon l'une quelconque des revendications précédentes, dans laquelle l'unité d'échange thermique (24) comprend au moins une jambe de sédimentation (49) terminant au moins l'un parmi le puits central (26) et le tronçon latéral incliné (28).

6. Architecture de forage (12) selon l'une quelconque des revendications précédentes, dans laquelle l'angle formé par l'axe local du puits central (26) orienté vers le bas au niveau de l'intersection centrale (50) et l'axe local du drain (30), pris au niveau de l'intersection latérale (56), orienté à l'écart du puits central (26), est strictement inférieur à 90° et est notamment compris entre 45° et 70°.

7. Architecture de forage (12) selon l'une quelconque des revendications précédentes, dans laquelle l'unité d'échange thermique (24) comporte des drains (30) comprenant chacun un tronçon linéaire (54) espacés verticalement au maximum de 200 mètres, les tronçons linéaires (54) étant avantageusement parallèles l'un à l'autre.

8. Architecture de forage (12) selon l'une quelconque des revendications précédentes, dans laquelle la distance en surface entre le puits central (26) et le puits latéral (28), au sein d'une même unité d'échange thermique est comprise entre 20 m et 100 m.

9. Architecture de forage (12) selon l'une quelconque des revendications précédentes, dans laquelle N unités d'échange thermique (24) sont forées côte à côte, les N unités d'échange thermique (24) étant chacune situées dans un plan en étant non coplanaires les unes avec les autres, en étant reparties soit linéairement dans des plans d'échangeurs parallèles, soit autour d'un axe vertical tous les 360/N°.

10. Installation géothermique (10) comportant une architecture de forage (12) selon l'une quelconque des revendications précédentes, un système de pompage (14) de fluide caloporteur (16) à réchauffer dans l'un du puits central (26) et du puits latéral (28), un système de récupération (18) de fluide caloporteur (16) réchauffé à partir de l'autre du puits central (26) et du puits latéral (28) et un dispositif de distribution ou/et de conversion d'énergie (20) à partir du fluide caloporteur (16) réchauffé.

11. Procédé de fabrication d'une architecture de forage (12) dans un sous-sol (22) comportant les étapes suivantes:
- forage du puits latéral (28) comprenant un tronçon latéral incliné (48) à partir de la surface du sous-sol (22) ;
- forage du puits central (26) à partir de la surface du sous-sol (22) ;
- forage d'au moins deux drains (30A, 30B) disjoints raccordant le puits central (26) et le tronçon latéral incliné (48) du puits latéral (28) ;
**caractérisé en ce que** pour la ou chaque unité d'échange thermique, le puits central (26), le puits latéral (28) et chaque drain (30) sont forés dans un même plan vertical, les intersections centrales (50) des drains (30) avec le puits central (26) et avec le tronçon latéral incliné (48) étant séparées les unes des autres et les drains (30) débouchant inclinés d'un angle inférieur à 45° par rapport au tronçon latéral incliné (48).

12. Procédé selon la revendication 11, dans lequel le forage du puits latéral (28) comporte l'injection de fluide de forage à travers un outil de forage (64) et le retour du fluide de forage à travers le puits latéral (28) dans l'annulaire défini entre l'outil de forage (64) et une paroi du puits latéral (28) ; le forage du puits central (26) à partir de la surface (22) et d'au moins un premier drain (30A) étant effectué postérieurement au forage du puits latéral (28) en maintenant du fluide de forage sous pression dans le puits latéral (28) au moins lors de la réalisation de l'intersection latérale (56) entre le premier drain et le tronçon latéral incliné (48), le fluide de forage sous pression dans le tronçon latéral incliné (48) remontant à travers le premier drain (30A) vers le puits central (26) après réalisation de l'intersection latérale (56).

13. Procédé selon la revendication 12, dans lequel le forage d'au moins deux drains (30A, 30B) distincts comprend le forage d'un deuxième drain (30B) au-dessus du premier drain (30A), postérieurement au forage du premier drain (30A), du fluide de forage sous pression étant maintenu en circulation dans le puits latéral (28) et à travers le premier drain (30A) au moins lors de la réalisation de l'intersection latérale (56) entre le deuxième drain et le tronçon latéral incliné (48), le fluide de forage sous pression dans le tronçon latéral incliné (48) remontant à travers le deuxième drain (30B) vers le puits central (26) après réalisation de l'intersection latérale (56).

## Patentansprüche

1. Bohrarchitektur (12), die in einem Untergrund (22) für eine geothermische Anlage (10) ausgebildet ist, umfassend mindestens eine Wärmetauschereinheit (24), umfassend:
- mindestens einen mittleren Bohrschacht (26), der sich von der Oberfläche des Untergrunds (22) aus erstreckt;
- mindestens einen seitlichen Bohrschacht (28), der sich von der Oberfläche des Untergrunds (22) erstreckt und einen geneigten Seitenabschnitt (48) aufweist;
- mindestens zwei separate gebohrte Drainagen (30A, 30B), die den mittleren Bohrschacht (26) und den geneigten Seitenabschnitt (48) des seitlichen Bohrschachts (28) verbinden;
**dadurch gekennzeichnet, dass** der mittlere Bohrschacht (26), der seitliche Bohrschacht (28) und jede Drainage (30) für die oder jede Wärmetauschereinheit (24) in einer gleichen vertikalen Ebene angeordnet sind, wobei die Schnittpunkte der Drainagen (30) mit dem mittleren Bohrschacht (26) und mit dem geneigten Seitenabschnitt (48) voneinander getrennt sind und die Drainagen (30) geneigt um einen Winkel von weniger als 45° in Bezug auf den geneigten Seitenabschnitt (48) münden.

2. Bohrarchitektur (12) nach Anspruch 1, wobei der mittlere Bohrschacht (26) vertikal ist.

3. Bohrarchitektur (12) nach einem der vorherigen Ansprüche, wobei der mittlere Bohrschacht (26) mindestens einen oberen vertikalen Abschnitt (36) aufweist, der sich über den Drainagen (30) befindet, wobei der obere vertikale Abschnitt (36) einen Durchmesser aufweist, der größer ist als der Durchmesser jeder Drainage (30).

4. Bohrarchitektur (12) nach einem der vorherigen Ansprüche, wobei die Drainagen (30) in ein plutonisches Gestein, insbesondere Granit, oder in ein metamorphes Gestein, insbesondere Gneis, gebohrt werden.

5. Bohrarchitektur (12) nach einem der vorherigen Ansprüche, wobei die Wärmetauschereinheit (24) mindestens einen Sedimentationsschenkel (49) umfasst, der mindestens eines von dem mittleren Bohrschacht (26) und dem geneigten Seitenabschnitt (28) abschließt.

6. Bohrarchitektur (12) nach einem der vorherigen Ansprüche, wobei der zwischen der lokalen Achse des mittleren Bohrlochs (26), die am mittleren Schnittpunkt (50) nach unten gerichtet ist, und der lokalen Achse der Drainage (30), die am seitlichen Schnittpunkt (56) genommen wird und vom mittleren Bohrloch (26) weg gerichtet ist, gebildete Winkel strikt kleiner als 90° ist und insbesondere zwischen 45° und 70° liegt.

7. Bohrarchitektur (12) nach einem der vorherigen Ansprüche, wobei die Wärmetauschereinheit (24) Drainagen (30) umfasst, jeweils umfassend einen linearen Abschnitt (54), die vertikal maximal 200 Meter voneinander entfernt sind, wobei die linearen Abschnitte (54) vorteilhafterweise parallel zueinander sind.

8. Bohrarchitektur (12) nach einem der vorherigen Ansprüche, wobei der Oberflächenabstand zwischen dem mittleren Bohrschacht (26) und dem seitlichen Bohrschacht (28) innerhalb einer einzelnen Wärmetauschereinheit zwischen 20 m und 100 m liegt.

9. Bohrarchitektur (12) nach einem der vorherigen Ansprüche, wobei N Wärmetauschereinheiten (24) nebeneinander gebohrt werden, wobei sich die N Wärmetauschereinheiten (24) jeweils in einer Ebene befinden, indem sie nicht koplanar zueinander sind, indem sie entweder linear in parallelen Wärmetauscherebenen oder um eine vertikale Achse alle 360/N° verteilt sind.

10. Geothermische Anlage (10), umfassend eine Bohrarchitektur (12) nach einem der vorherigen Ansprüche, ein System (14) zum Pumpen von Wärmeträgerfluid (16), das in einem von dem mittleren Bohrschacht (26) und dem seitlichen Bohrschacht (28) erwärmt werden soll, ein System zum Rückgewinnen (18) des erwärmten Wärmeträgerfluids (16) aus dem anderen von dem mittleren Bohrschacht (26) und dem seitlichen Bohrschacht (28) und eine Vorrichtung zum Verteilen oder/und Umwandeln von Energie (20) aus dem erwärmten Wärmeträgerfluid (16).

11. Herstellungsverfahren einer Bohrarchitektur (12) in einem Untergrund (22), umfassend die folgenden Schritte:
- Bohren des seitlichen Bohrschachts (28), umfassend einen geneigten Seitenabschnitt (48), ausgehend von der Oberfläche des Untergrunds (22);
- Bohren des mittleren Bohrschachts (26) ausgehend von der Oberfläche des Untergrunds (22);
- Bohren von mindestens zwei separaten Drainagen (30A, 30B), die den mittleren Bohrschacht (26) und den geneigten Seitenabschnitt (48) des seitlichen Bohrschachts (28) verbinden;
**dadurch gekennzeichnet, dass** der mittlere Bohrschacht (26), der seitliche Bohrschacht (28) und jede Drainage (30) für die oder jede Wärmetauschereinheit in einer gleichen vertikalen Ebene gebohrt werden, wobei die mittleren Schnittpunkte (50) der Drainagen (30) mit dem mittleren Bohrschacht (26) und mit dem geneigten Seitenabschnitt (48) voneinander getrennt sind und die Drainagen (30) geneigt um einen Winkel von weniger als 45° in Bezug auf den geneigten Seitenabschnitt (48) münden.

12. Verfahren nach Anspruch 11, wobei das Bohren des seitlichen Bohrschachts (28) das Einspritzen von Bohrfluid durch ein Bohrwerkzeug (64) und ein Zurückführen des Bohrfluids durch den seitlichen Bohrschacht (28) in den Ringraum, der zwischen dem Bohrwerkzeug (64) und einer Wand des seitlichen Bohrschachts (28) definiert ist, umfasst; wobei das Bohren des mittleren Bohrschachts (26) ausgehend von der Oberfläche (22) und mindestens einer ersten Drainage (30A) nach dem Bohren des seitlichen Bohrschachts (28) durchgeführt wird, indem Bohrfluid unter Druck in dem seitlichen Bohrschacht (28) zumindest während der Herstellung der seitlichen Überschneidung (56) zwischen der ersten Drainage und dem geneigten Seitenabschnitt (48) gehalten wird, das Bohrfluid unter Druck in dem geneigten Seitenabschnitt (48) durch die erste Drainage (30A) zu dem mittleren Bohrschacht (26) aufsteigt, nachdem die seitliche Überschneidung (56) durchgeführt wurde.

13. Verfahren nach Anspruch 12, wobei das Bohren von mindestens zwei getrennten Drainagen (30A, 30B) das Bohren einer zweiten Drainage (30B) über der ersten Drainage (30A) nach dem Bohren der ersten Drainage (30A) umfasst, Bohrfluid unter Druck in dem seitlichen Bohrschacht (28) und durch die erste Drainage (30A) zumindest während der Herstellung der seitlichen Überschneidung (56) zwischen der zweiten Drainage und dem geneigten Seitenabschnitt (48) in Zirkulation gehalten wird, wobei das Bohrfluid unter Druck in dem geneigten Seitenabschnitt (48) nach Herstellung der seitlichen Überschneidung (56) durch die zweite Drainage (30B) zu dem mittleren Bohrschacht (26) aufsteigt.

## Claims

1. A drilling layout (12) provided in a subsoil (22) for a geothermal installation (10), comprising at least one heat exchange unit (24) comprising:
- at least one central well (26) extending from the surface of the subsoil (22);
- at least one flank well (28) extending from the surface of the subsoil (22) and having an inclined lateral portion (48);
- at least two separate drains (30A, 30B) connecting the central well (26) and the inclined lateral portion (48) of the flank well (28);
**characterized in that** for the or each heat exchange unit (24), the central well (26), the flank well (28) and each drain (30) are set out in the one same vertical plane, the intersections between the drains (30) and the central well (26) and between the drains and the inclined lateral portion (48) being separated from one another and the drains (30) opening inclined by an angle less than 45° with respect to the inclined lateral portion (48).

2. The drilling layout (12) according to claim 1, wherein the central well (26) is vertical.

3. The drilling layout (12) according to any of the preceding claims, wherein the central well (26) has at least one upper vertical portion (36) located above the drains (30), the upper vertical portion (36) having a diameter greater than the diameter of each drain (30).

4. The drilling layout (12) according to any of the preceding claims, wherein the drains (30) are drilled in a plutonic rock, in particular in granite, or in a metamorphic rock, in particular in gneiss.

5. The drilling layout (12) according to any of the preceding claims, wherein the heat exchange unit (24) comprises at least one sedimentation leg (49) terminating at least one of the central well (26) and the inclined lateral portion (28).

6. The drilling layout (12) according to any of the preceding claims, wherein the angle formed by the local axis of the central well (26), oriented downwards at the central intersection (50), and the local axis of the drain (30), taken at the lateral intersection (56), oriented away from the central well (26), is strictly less than 90° and is in particular between 45° and 70°.

7. The drilling layout (12) according to any one of the preceding claims, wherein the heat exchange unit (24) comprises drains (30) each comprising a linear portion (54) vertically spaced apart by a maximum of 200 metres, the linear portions (54) advantageously being parallel to one another.

8. The drilling layout (12) according to any of the preceding claims, wherein the surface distance between the central well (26) and the flank well (28), within the same heat exchange unit, is between 20 m and 100 m.

9. The drilling layout (12) according to any of the preceding claims, wherein N heat exchange units (24) are drilled next to one another, the N heat exchange units (24) being each positioned in a plane, being not coplanar one with another, and being distributed either linearly in parallel exchanger planes or about a vertical axis every 360/N°.

10. A geothermal installation (10) comprising a drilling layout (12) according to any one of the preceding claims, a system (14) for pumping heat-transfer fluid (16) to be heated into either the central well (26) or the flank well (28), a system (18) for recovering heat-transfer fluid (16) heated from the other of the central well (26) and the flank well (28) and a device for distributing or/and converting energy (18) from the heated heat transfer fluid (16).

11. A method for manufacturing a drilling layout (12) in a subsoil (22) comprising the following steps:
- drilling the flank well (28) comprising an inclined lateral portion (48) from the surface of the subsoil (22);
- drilling the central well (26) from the subsoil (22) surface;
- drilling at least two separate drains (30A, 30B) connecting the central well (26) and the inclined lateral portion (48) of the flank well (28);
**characterized in that** for the or each heat exchange unit, the central well (26), the flank well (28) and each drain (30) are drilled in the one same vertical plane, the central intersections (50) between the drains (30) and the central well (26) and between the drains and the inclined lateral portion (48) being separated from one another and the drains (30) opening inclined by an angle less than 45° with respect to the inclined lateral portion (48).

12. The method according to claim 11, wherein the drilling of the flank well (28) comprises injecting drilling fluid through a drilling tool (64) and returning the drilling fluid through the flank well (28) in the annulus defined between the drilling tool (64) and a wall of the flank well (28); the drilling of the central well (26) from the surface (22) and of at least a first drain (30A) being carried out after the drilling of the flank well (28), keeping the drilling fluid under pressure in the flank well (28) at least during the formation of the lateral intersection (56) between the first drain (30A) and the inclined lateral portion (48), the drilling fluid under pressure in the inclined lateral portion (48) rising through the first drain (30A) towards the central well (26) after the lateral intersection (56) is formed.

13. The method according to claim 12, wherein the drilling of at least two separate drains (30A, 30B) comprises drilling a second drain (30B) above the first drain (30A), after the drilling of the first drain (30A), pressurised drilling fluid being kept in circulation in the flank well (28) and through the first drain (30A) at least while the lateral intersection (56) between the second drain (30B) and the inclined lateral portion (48) is formed, the pressurised drilling fluid in the inclined lateral portion (48) rising through the second drain (30B) towards the central well (26) after the lateral intersection (56) has been formed.
